# EUROPEAN PATENT APPLICATION

(11) **EP 4 835 707 A1**
(43) Date of publication of application: **04.11.2026**
(21) Application number: 26165083.2
(22) Date of filing: 16.03.2026
(51) Int. Cl.: G06F 21/57, H04L 9/40

(54) **METHOD AND SYSTEM FOR STRATEGIZING NETWORK MIGRATION IN ADAPTATION TO POST QUANTUM CRYPTOGRAPHY**

(30) Priority: 30.04.2025 IN 202521041715
(71) Applicant: Tata Consultancy Services Limited, Maharashtra (IN)
(72) Inventor: BHOWMICK, Amit, 560066 Bangalore, Karnataka (IN); MADDALI, Lakshmi Padmaja, 500081 Hyderabad, Telangana (IN); SINGH DILIP THAKUR, Meena, 560066 Bangalore, Karnataka (IN); BHATTACHAR, Rajan Mindigal Alasingara, 560066 Bangalore, Karnataka (IN)
(74) Representative: Goddar, Heinz J.

(57) **Abstract**

With the advancements in quantum computing, transitioning to quantum-safe cryptography is becoming increasingly critical to keep today's network secure. The present disclosure introduces a method for industrial application network migration. This involves formalizing a Harvest Now Decrypt Later (HNDL) adversarial model, finding a risk score of a successful HNDL attack in any network links followed by in any network component. Graph theory and the Markov chain is used for finding out the central network points. The centrality of network points is measured using a centrality score. The central points are the points in the network, compromising those can compromise a significant part of the total network. Finally, a critical score is given to network points based on risk score, centrality score and metadata about the network points. This critical score can be a priority number given to the network points to rank them for migration to quantum safe state.

## Description

### CROSS-REFERENCE TO RELATED APPLICATIONS AND PRIORITY

The present application claims priority from Indian patent application no. 202521041715 filed on April 30, 2025.

### TECHNICAL FIELD

The disclosure herein generally relates to the field of post quantum cryptography and, more particularly, to a method and system for strategizing network migration in adaptation to post quantum cryptography.

### BACKGROUND

The potential rise of quantum computation poses a significant threat to the existing cryptographic landscape. Current cryptographic algorithms, particularly asymmetric key encryption and digital signature algorithms are vulnerable to attacks by powerful quantum computers. Attackers intercept and store encrypted data today even though they cannot decrypt it with existing technology. However, they plan to decrypt the data when sufficient powerful quantum computers become available, such an attack is known as Harvest Now Decrypt Later (HNDL) attack. These attacks compromise the security of application specific sensitive data with long lifetime transmitted over the internet, particularly within critical sectors like healthcare, finance, e-commerce and others. Transitioning existing network architecture to quantum safe state by introducing post-quantum cryptography (PQC) in it is a widely acceptable approach to mitigate the quantum computing threat. PQC algorithms are designed to be secure against both classical and quantum computers.

After the announcement of the first post-quantum public key algorithms for consideration as an international standard by the National Institute of Standards and Technology (NIST), the transition to PQC has started in practice. Many initiatives has been taken to safeguard cryptographic system against post quantum threat. However, none of the conventional methods precisely been dedicated to network migration problem keeping in mind the HNDL risk associated with upcoming computational boost due to quantum technology.

### SUMMARY

Embodiments of the present disclosure present technological improvements as solutions to one or more of the above-mentioned technical problems recognized by the inventors in conventional systems. For example, in one embodiment, a method for strategizing network migration in adaptation to post quantum cryptography is provided. The method includes receiving, by one or more hardware processors, an input network architecture of an application comprising a plurality of components and an associated plurality of interconnection between the plurality of components. Further, the method includes generating, by the one or more hardware processors, a directed graph based on the input network architecture by representing each of the plurality of components of the input network architecture as a plurality of nodes and the associated plurality of interconnections between the plurality of components as edges using a graph construction technique, wherein each edge is associated with an edge label comprising an associated cryptographic inventory information. Furthermore, the method includes computing, by the one or more hardware processors, an edge Harvest Now Decrypt Later (HNDL) risk value for each of the plurality of edges of the directed graph by categorizing the plurality of edges of the directed graph into distinct subsets based on the cryptographic information associated with each of the plurality of edges using a HNDL adversarial model. Furthermore, the method includes transforming, by the one or more hardware processors, the edge HNDL risk value to a node HNDL risk value pertaining to each of the plurality of nodes based on the edge HNDL risk value for each of the plurality of edges of the directed graph and an associated routing information of each of the plurality of nodes and the routing information of an associated plurality of adjacent nodes using a risk transformation technique. Furthermore, the method includes simultaneously computing, by the one or more hardware processors, a modified eigen vector centrality for each of the plurality of nodes of the graph using a modified eigen vector centrality computation technique. Finally, the method includes computing, by the one or more hardware processors, a critical score for each of the plurality of nodes based on an associated node metadata, the modified eigen vector centrality and an associated node HNDL risk value using a critical network component identification technique.

In another aspect, a system for strategizing network migration in adaptation to post quantum cryptography is provided. The system includes at least one memory storing programmed instructions, one or more Input /Output (I/O) interfaces, and one or more hardware processors operatively coupled to the at least one memory, wherein the one or more hardware processors are configured by the programmed instructions to receive an input network architecture of an application comprising a plurality of components and an associated plurality of interconnection between the plurality of components. Further, the one or more hardware processors are configured by the programmed instructions to generate a directed graph based on the input network architecture by representing each of the plurality of components of the input network architecture as a plurality of nodes and the associated plurality of interconnections between the plurality of components as edges using a graph construction technique, wherein each edge is associated with an edge label comprising an associated cryptographic inventory information. Furthermore, the one or more hardware processors are configured by the programmed instructions to compute an edge Harvest Now Decrypt Later (HNDL) risk value for each of the plurality of edges of the directed graph by categorizing the plurality of edges of the directed graph into distinct subsets based on the cryptographic information associated with each of the plurality of edges using a HNDL adversarial model. Furthermore, the one or more hardware processors are configured by the programmed instructions to transform the edge HNDL risk value to a node HNDL risk value pertaining to each of the plurality of nodes based on the edge HNDL risk value for each of the plurality of edges of the directed graph and an associated routing information of each of the plurality of nodes and the routing information of an associated plurality of adjacent nodes using a risk transformation technique. Furthermore, the one or more hardware processors are configured by the programmed instructions to simultaneously compute a modified eigen vector centrality for each of the plurality of nodes of the graph using a modified eigen vector centrality computation technique. Finally, the one or more hardware processors are configured by the programmed instructions to compute a critical score for each of the plurality of nodes based on an associated node metadata, the modified eigen vector centrality and an associated node HNDL risk value using a critical network component identification technique.

In yet another aspect, a computer program product including a non-transitory computer-readable medium embodied therein a computer program for strategizing network migration in adaptation to post quantum cryptography is provided. The computer readable program, when executed on a computing device, causes the computing device to receive an input network architecture of an application comprising a plurality of components and an associated plurality of interconnection between the plurality of components. Further, the computer readable program, when executed on a computing device, causes the computing device to generate a directed graph based on the input network architecture by representing each of the plurality of components of the input network architecture as a plurality of nodes and the associated plurality of interconnections between the plurality of components as edges using a graph construction technique, wherein each edge is associated with an edge label comprising an associated cryptographic inventory information. Furthermore, the computer readable program, when executed on a computing device, causes the computing device to compute an edge Harvest Now Decrypt Later (HNDL) risk value for each of the plurality of edges of the directed graph by categorizing the plurality of edges of the directed graph into distinct subsets based on the cryptographic information associated with each of the plurality of edges using a HNDL adversarial model. Furthermore, the computer readable program, when executed on a computing device, causes the computing device to transform the edge HNDL risk value to a node HNDL risk value pertaining to each of the plurality of nodes based on the edge HNDL risk value for each of the plurality of edges of the directed graph and an associated routing information of each of the plurality of nodes and the routing information of an associated plurality of adjacent nodes using a risk transformation technique. Furthermore, the computer readable program, when executed on a computing device, causes the computing device to simultaneously compute a modified eigen vector centrality for each of the plurality of nodes of the graph using a modified eigen vector centrality computation technique. Finally, the computer readable program, when executed on a computing device, causes the computing device to compute a critical score for each of the plurality of nodes based on an associated node metadata, the modified eigen vector centrality and an associated node HNDL risk value using a critical network component identification technique.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for strategizing network migration in adaptation to post quantum cryptography, in accordance with some embodiments of the present disclosure.
FIG. 1B illustrates overall functional architecture of the system for the strategizing network migration in adaptation to post quantum cryptography, in accordance with some embodiments of the present disclosure.
FIG. 2 illustrates a flow diagram for a processor implemented method for strategizing network migration in adaptation to post quantum cryptography, in accordance with some embodiments of the present disclosure.
FIG. 3A illustrates an example of input system architecture for the processor implemented method for strategizing network migration in adaptation to post quantum cryptography, in accordance with some embodiments of the present disclosure.
FIG. 3B illustrates an example directed graph equivalent to an input system architecture for the processor implemented for strategizing network migration in adaptation to post quantum cryptography, in accordance with some embodiments of the present disclosure.
FIG. 4 illustrates an example protocol hierarchy for the processor implemented method for strategizing network migration in adaptation to post quantum cryptography, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

A Quantum Day (Q-Day), which refers to the hypothetical future date when quantum computers will become powerful enough to break current cryptographic algorithms. Harvest-Now-Decrypt-Later (HNDL) attacks are a type of cyber-attack where adversaries collect (harvest) encrypted data today with the intention of decrypting it in the future when the necessary decryption capabilities become available (On or after Q-Day). An adversary who tries to make HNDL attack is referred to as HNDL adversary. The Q-Day risk lies in critical data with long-term value, such as those in energy, transportation, finance, healthcare, e-commerce and government infrastructures, which have product lifetimes of 10-15 years or more.

Migration of an industrial application network means upgradation by means of software or hardware update of the network devices from their current state such that it became capable of supporting the security protocol when the existing security protocol's underlying classical cryptographic primitive replaced with post quantum cryptographic primitive. Industrial application networks usually include of thousands of devices, hence, to upgrade those devices to a future quantum safe state there is a need for a framework that can identify the HNDL vulnerability associated with any device and give an idea to the application owner that which of the devices upgradation need to be prioritize.

To address the above said challenges, embodiments herein provide a method and system for strategizing network migration in adaptation to post quantum cryptography. The present disclosure provides an application agnostic approach to initiate the PQC transition within the context of industrial application networks.

For example, any industrial application network (use-case: e-commerce industry network, stored video streaming industry network) consists of several devices (alternatively termed as network components) like load balancers, servers, databases, etc., and links between the devices identifying data flow between devices. The present disclosure aims to identify the network components (ex: servers, load balancer) in a given industrial application network, based on their vulnerability to the Harvest-Now-Decrypt-Later (HNDL) attack.

The present disclosure identifies network points within a given network that are susceptible to HNDL attacks by calculating a critical score for every network point. This critical score can be thought of as a priority number given to the network points to rank them for migration to quantum safe state. This critical score is calculated considering several factors like risk score of successful HNDL attack to its adjacent network links, proportion of network data a network point holds, several metadata about the network points, etc.

By exploring the rich theoretical root of graph theory, Markov chain, the present disclosure, assesses the challenges of finding out the central network points in any given industrial application network by giving a centrality score. The central network points are those network points compromising that through an HNDL attack is more likely as this can compromise a significant part of the total network.

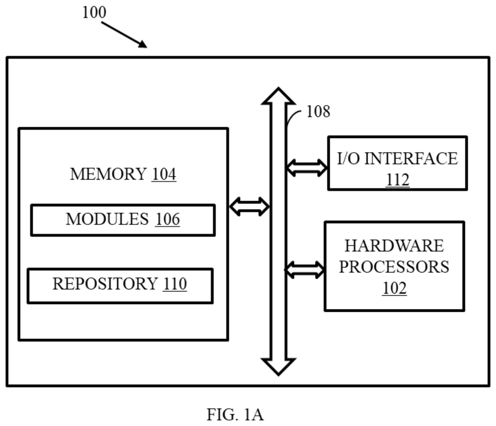

Referring now to the drawings, more particularly to FIG. 1A through FIG. 4, where similar reference characters denote corresponding features consistently throughout the figures, there are shown preferred embodiments, and these embodiments are described in the context of the following exemplary system and/or method.

FIG. 1A is a functional block diagram of a system 100 for strategizing network migration in adaptation to post quantum cryptography, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Strategizing network migration in adaptation to post quantum cryptography. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for Strategizing network migration in adaptation to post quantum cryptography.

The data repository (or repository) 110 may include a plurality of abstracted pieces of code for refinement and data that is processed, received, or generated as a result of the execution of the plurality of modules in the module(s) 106.

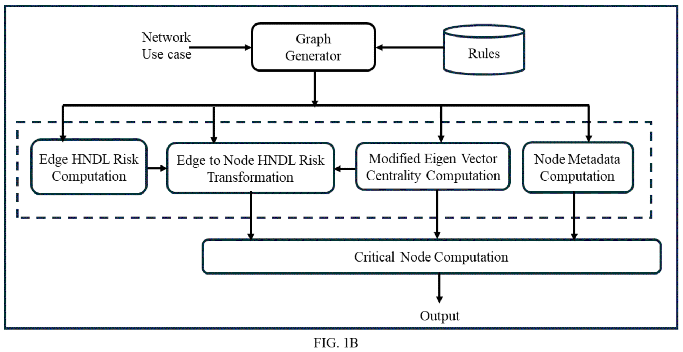

Although the data repository 110 is shown internal to the system 100, it will be noted that, in alternate embodiments, the data repository 110 can also be implemented externally to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS). The overall modular architecture of the system 100 of FIG. 1A is explained in conjunction with FIG. 1B.

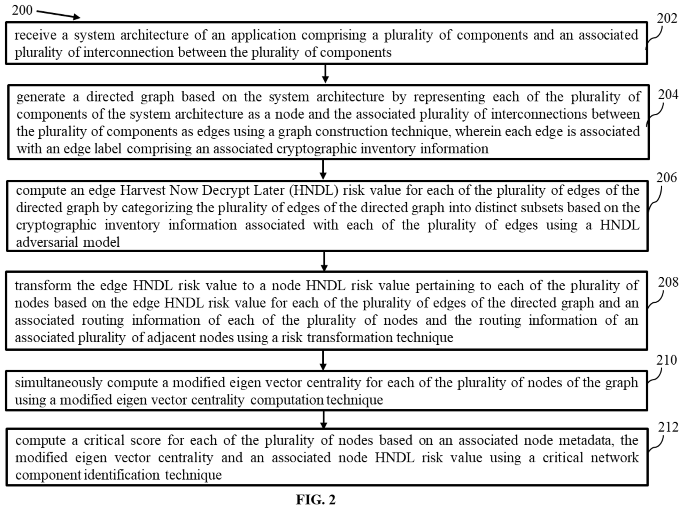

The working of the components of system 100 are explained with reference to the method steps depicted in FIG. 2, which is an exemplary flow diagram illustrating a method 200 for strategizing network migration in adaptation to post quantum cryptography implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented with any suitable hardware, software, firmware, or combination thereof.

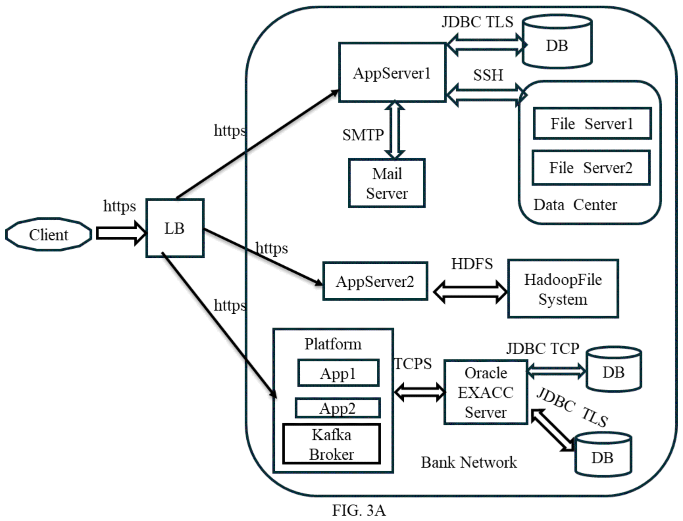

Now referring to FIG. 2, at step 202 of method 200, the one or more hardware processors 102 are configured by the programmed instructions to receive an input network architecture of an application comprising a plurality of components and an associated plurality of interconnection between the plurality of components. For example, the input network architecture or system network architecture is given as input in Extensible Markup Language (XML) format. An example input network architecture is given in FIG. 3A. Now referring to FIG. 3A, the diagram illustrates an e-commerce workflow. Client initiates a request via web browser or mobile app and the request typically use https for secure communication. This request comes to Load Balancer. Based on the request type, Load Balancer forwards the request to one or more Application Servers. The Application Servers interact with Mail Servers, File Servers, Kafka, Hadoop, and Oracle EXACC to process the request. Secure JDBC, SSH, and HTTPS protocols handle communication.

At step 204 of the method 200, the one or more hardware processors 102 are configured by the programmed instructions to generate a directed graph based on the input network architecture by representing each of the plurality of components of the input network architecture as a node and the associated plurality of interconnections between the plurality of components as edges using a graph construction technique. Each edge of the graph is associated with an edge label comprising an associated cryptographic inventory information.

A directed graph *G* = (*V, E*) represents an industrial application network architecture. *V* is the vertex set. Any vertex *v* ∈ *V* represents a network device in the industrial network application. Examples of network devices include Load Balancer, Application Server, Platform Server, Databases and so on. A directed edge *e*_{*v*₁*v*₂} ∈ *E, v*₁, *v*₂ ∈ *V* exists if data flows from device *v*₁ to device *v*₂ directly. Some examples are a Client App (*v*₁) sending request to Load Balancer (*v*₂) and it can be represented as *e*_{*v*₁*v*₂}*.*

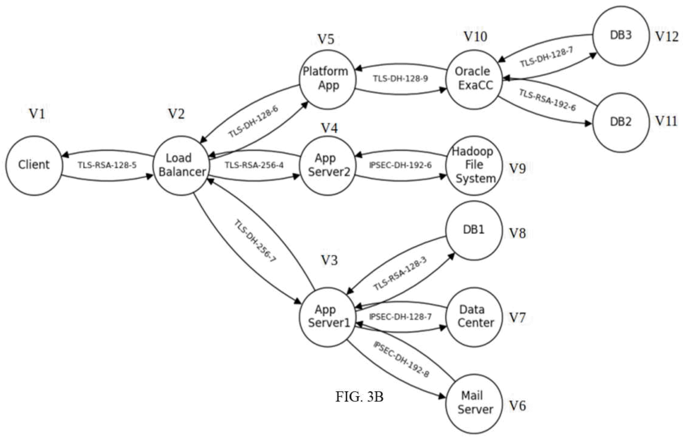

For example, FIG. 3B illustrates an example directed graph associated with the input network architecture of an e-commerce industry network. Now referring to FIG. 3B, the diagram is graphical representation of figure 3A. It is represented with bidirectional edges to capture both way traffic between several devices in the application network.

For example, each of a plurality of nodes is associated with a network information and a metadata. The metadata associated with each of the plurality of nodes includes a device type (*y*₁), a software security information (*y*₂), a data stored tenure (*y*₃)*,* a data security level (*y*₄) and accessibility information (*y*₅). The network information includes a routing information and a network data detail.

The accumulated metadata effect in HNDL risk, of a node can be defined as given in equation (1). ${M}_{HNDL}^{v} = T \left({y}_{1}, {y}_{2}, {y}_{3}, {y}_{4}, {y}_{5}\right)$ (1)

Now, referring to equation (1), the choice of function *T*(*y*₁,*y*₂,*y*₃,*y₄,y*₅) is not important and can be chosen as relevant since present disclosure aims to order the network points based on their vulnerability of HNDL attacks by giving critical score. The specific metadata effect for any node is not important; rather the relative order is what the present disclosure aims to determine. For example, *T* can be a linear function *T* = Σ *αᵢ * yᵢ* where *αᵢ* are weights and for simplicity, the weights can be equal.

For example, the cryptographic inventory information includes a security protocol, a cryptographic primitive information, a data shelf life and a key rotation period. The cryptographic primitive information includes a public key cryptography algorithm used and a symmetric key length.

For example, some of the intrinsic parameters (the cryptographic inventory information) that can potentially influence the HNDL risk associated with any edge are explained as follows:
- *Security Protocol* (*x*₁): Data follows through network links that are secured through some security protocol like Transport Layer Security (TLS), Internet Protocol Security (IPSEC), etc. Quantum computing poses varying effects on the data (in motion) based on the protocol through which it is secured.
- *Public Key Cryptography algorithm used* (*x*₂*):* The cryptographic area that is at high risk due to the rise in quantum computing is public key cryptography. Here we will capture public key cryptography (Rivest Shamir Adleman (RSA), Elliptic Curve Diffie-Hellman (ECDH), etc.) used to generate the data follow-through links or establish key between two parties. Priority is given based on their resistance to quantum computing.
- *Symmetric key length (x*₃*):* Data follows through network links usually encrypted using symmetric key cryptography. Due to Grover's search algorithm based on the key length quantum computing poses varying effects on this encrypted data.
- *Key Rotation period (x*₄*):* Usually, the symmetric key used between two parties is changed after a period. The length of this time interval has a proportional relation with the vulnerability posed by quantum computing.
- *Data shelf life (x*₅*):* When HNDL attack is considered the most important factor is the lifetime of data that is being harvested. Data shelf life and quantum vulnerability are proportionally related.

At step 206 of the method 200, the one or more hardware processors 102 are configured by the programmed instructions to compute an edge Harvest Now Decrypt Later (HNDL) risk value for each of the plurality of edges of the directed graph by categorizing the plurality of edges of the directed graph into distinct subsets based on the cryptographic information associated with each of the plurality of edges using a HNDL adversarial model.

For example, having said what HNDL adversary and HNDL attack means, one trivial observation is that the objective of an HNDL adversary is to collect encrypted data from network links with an intention to decrypt it after Q-Day. Suppose the amount of data collected by an HNDL adversary AHNDL from any network links (or edge) e is defined as *dₑ* then, the HNDL risk associated with that edge as is defined as given in equation (2).${R}_{HNDL}^{e} = F \left({A}_{HNDL} able to decrypt {d}_{e} after Q-day\right)$ (2) For example, the HNDL risk associated with any network link is a function of the above parameters (*x*₁, *... ... ... ... .. x*₅) as given in equation (3). Now referring to equation (2), *T*₀ represents current time and *Q_{T}* is the Q-day. ${R}_{HNDL}^{e} = F \left({x}_{1}, {x}_{2}, {x}_{3}, {x}_{4}, {x}_{5}, {T}_{0}, {Q}_{T}\right)$ (3)

Now referring to equation (3), the choice of function *F*(*x*₁,*x*₂,*x*₃,*x*₄,*x*₅,*T*₀*,Q_{T}*) is not important and can be chosen as relevant since present disclosure aims to order the network points based on their vulnerability of HNDL attacks by giving critical score. For example, *F* can be a linear function *F* = Σ *βᵢ * xᵢ* where *βᵢ* are weights, for simplicity, weights can be equal and *xᵢ* are the input parameters for the function *F*(*x*₁,*x*₂,*x*₃,*x*₄,*x*₅,*T*₀*,Q_{T}*) where *i* = 1, 2, .., 7.

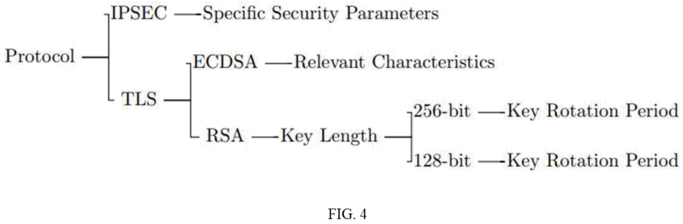

In a realistic scenario, there may be thousands of links, and calculating HNDL risk for every edge separately may be cumbersome. Hence the present disclosure partitions the set of edges into distinct subsets based on their characteristics such as any two edges in any particular partition have the same HNDL risk value. The present disclosure utilizes a tree-based structure to partition the edges. Data in motion is typically generated using security protocols such as TLS or IPSEC. At the root of the tree, edges are categorized based on the protocol used as shown in FIG. 4. This hierarchical structure shown in FIG. 4 ensures that each leaf node of the tree represents a set of edges with identical HNDL risk values. By leveraging this tree-based partitioning, we avoid redundant calculations. For instance:
- TLS Edges: further subdivided based on the public key cryptography algorithm (e.g., RSA or Elliptic Curve Digital Signature Algorithm (ECDSA)).
   ∘ RSA Edges: Grouped by key lengths (e.g., 128-bit or 256-bit) followed by key rotation period and then data lifetime.
   ∘ ECDSA Edges: Similarly divided based on relevant characteristics.
- IPSEC Edges: Partitioned using analogous criteria based on their specific security parameters.

At step 208 of the method 200 the one or more hardware processors 102 is configured by the programmed instructions to transform the edge HNDL risk value to a node HNDL risk value pertaining to each of the plurality of nodes based on the edge HNDL risk value for each of the plurality of edges of the directed graph and an associated routing information of each of the plurality of nodes and the routing information of an associated plurality of adjacent nodes using a risk transformation technique. The risk transformation is performed using the formula given in equation (4). ${E}_{HNDL}^{v} = {\sum }_{j} {t}_{{v}_{j} v} {R}_{HNDL}^{{e}_{{v}_{j} v}}$ (4)

At step 210 of the method 200, the one or more hardware processors 102 is configured by the programmed instructions to simultaneously compute a modified eigen vector centrality for each of the plurality of nodes of the graph using a modified eigen vector centrality computation technique.

For example, in an HNDL attack scenario, the vulnerability increases with the amount of data captured, making it crucial to estimate the traffic through each device out of the total traffic of the network. To address this, the present disclosure utilized the concept of random walks, the Markov chain, and the routing protocol. Further, the present disclosure derived one centrality measure named Modified Eigenvector Centrality (from graph theory) to identify the nodes that handle the most network traffic.

Suppose some object is moving through a graph G and its location at the current step is vertex *vᵢ* and let the out-degree of the vertex be ${d}_{out}^{{v}_{i}}$*.*Then at the next step, the location is a vertex *vⱼ* chosen uniformly at random from the set of out-neighbors of *vᵢ*. Such a process is called a random walk or Markov chain, where the word Markov means that what happens at the next step depends on which vertex the process currently is at, and does not depend on how the process got to that vertex.

Considering network traffic flow, in a real scenario it doesn't choose the next node uniformly like a random walk. At a certain node *vᵢ* it chooses the next node based on the routing protocol, denoted as *R^{vⁱ}* at the node *vᵢ* . The transition matrix corresponding to the network graph is defined as given in equation (5). $T = {\left({t}_{ij}\right)}_{ij} = {\left({t}_{{v}_{i} {v}_{j}}\right)}_{i , j} , {\sum }_{j} {t}_{ij} = 1$ (5)

Now referring to equation (5), where *tᵢⱼ* denotes the probability that the object will choose the vertex *vⱼ* in the next step when current vertex is *vᵢ*. This value is derived from the routing protocol *R^{vⁱ}* at the vertex *vᵢ*. If the vertex *vᵢ* sends p-percent of its total traffic to *vⱼ* , then ${t}_{ij} = \frac{p}{100}$.

let *G* = (*V, E*) be a directed graph representing our network, such that |*V*| = *n,* choose any arbitrary vector *w*⁰ = (*w*₁, *w*₂, *..., wₙ*) such that ∑*ᵢ wᵢ* = 1, where *wᵢ* represents the probability of moving object is at vertex *vᵢ* at the 0-th step. As *T* represents the transition probability matrix, the present disclosure can generate a sequence *w*^{*t*+1} ← *Tw^{t}.* This sequence will always converge to a vector *w** (Perron-Frobenius Theorem) which is the eigenvector of the matrix T corresponding to the largest eigenvalue (Exist by Perron-Frobenius Theorem).

Modified eigen vector centrality: let *T* be the transition matrix of the graph and *λ* be the eigenvalue with highest absolute value and the *w* = (*w*₁, *w*₂, ..., *wₙ*) is the unique (up to a constant) eigenvector (Exist by Perron-Frobenius Theorem) corresponding to λ, then modified eigen vector centrality of the i-th vertex of the graph, denoted as *MEC*(*vᵢ*) *= wᵢ.*

The eigenvalue equation is given by: *Tw = λw,* where *T* is the transition matrix, *w* is the eigenvector, and *λ* is the eigenvalue. Expanding this equation, the equation (6) is obtained. $\left(\begin{matrix}{t}_{11} & ⋯ & {t}_{1 n} \\ ⋮ & ⋱ & ⋮ \\ {t}_{n 1} & ⋯ & {t}_{nn}\end{matrix}\right) \left(\begin{matrix}{w}_{1} \\ ⋅ \\ w\end{matrix}\right) = λ ⋅ \left(\begin{matrix}{w}_{1} \\ ⋅ \\ {w}_{n}\end{matrix}\right)$ (6) $This implies {\sum }_{j = 1}^{n} {t}_{ij} {w}_{j} = {λw}_{i}$ (7) $Rewriting : {λw}_{i} = {\sum }_{j ∈ {N}_{i}} {t}_{ij} {w}_{i}$ (8) where *Nᵢ* is the set of out neighbors of node *i*. ${λw}_{i} ∝ {\sum }_{j ∈ {N}_{i}} {D}_{ij} {w}_{i}$ (9) where *Dᵢⱼ* represents the amount of traffic from node *i to j.* Thus, *wᵢ* will be higher if *Dᵢⱼ* is high for neighboring nodes. Hence, a node with high eigenvector centrality may be responsible for a significant amount of traffic.

At step 212 of the method 200, the one or more hardware processors 102 is configured by the programmed instructions to compute a critical score for each of the plurality of nodes based on an associated node metadata, the modified eigen vector centrality and an associated node HNDL risk value using a critical network component identification technique. For example, the critical score is computed using the formula given in equation (10). ${C}_{HNDL}^{v} = G \left({M}_{HNDL}^{v}, MEC\left(v\right), {E}_{HNDL}^{v}\right)$ (10).

The choice of function $G \left({M}_{HNDL}^{v}, MEC\left(v\right), {E}_{HNDL}^{v}\right)$ is not important and can be chosen as relevant since present disclosure aims to order the network points based on their vulnerability of HNDL attacks by giving critical score. For example, *G* can be a linear function *G* = Σ *γᵢ* * *zᵢ* where *γᵢ* are weights, for simplicity, weights can be equal and *zᵢ* where *i* = 1,2,3 ,representing the input parameters for the function $G \left({M}_{HNDL}^{v}, MEC\left(v\right), {E}_{HNDL}^{v}\right)$.

Experimentation: In an embodiment, the present disclosure has been experimented, and the details of experimentation are given below: For example, Consider, calculating the critical score of the node "App server2" of FIG. 3A. So, in this case our goal is to calculate the critical score of vertex v₄ of FIG. 3B, which is given in equation (11). ${C}_{HNDL}^{{v}_{4}} = g \left({M}_{HNDL}^{{v}_{4}},MEC\left({v}_{4}\right),{E}_{HNDL}^{{v}_{4}}\right)$ (11) Here, *MEC*(*v*₄) is the modified eigen vector centrality and is computed as follows: If *T* given in Table I is the matrix obtained from the graph generator module, and the eigen vector corresponding the highest eigen value is given in equation (12). Then *MEC*(*v*₄) = 0.0568. $v = \left|\begin{matrix}0.0568 \\ 0.0510 \\ 0.0568 \\ 0.0568 \\ 0.0568 \\ 0.0510 \\ 0.0510 \\ 0.0510 \\ 0.0510 \\ 0.0568 \\ 0.0510 \\ 0.0568\end{matrix}\right|$ (12)

**Table I**

| | 1 | 2 | 3 | 4 | 5 | 6 | 7 | 8 | 9 | 10 | 11 | 12 |
|---|---|---|---|---|---|---|---|---|---|---|---|---|
| 1 | 0 | 0.78 6 | 0 | 0 | 0 | 0 | 0 | 0 | 0 | 0 | 0 | 0 |
| 2 | 0.78 6 | 0 | 1 | 0.85 7 | 0.78 6 | 0 | 0 | 0 | 0 | 0 | 0 | 0 |
| 3 | 0 | 1 | 0 | | | 0.92 9 | 0.78 6 | 0.64 3 | 0 | 0 | 0 | 0 |
| 4 | 0 | 0.85 7 | 0 | 0 | 0 | 0 | 0 | 0 | 0.78 6 | 0 | 0 | 0 |
| 5 | 0 | 0.78 6 | 0 | 0 | 0 | 0 | 0 | 0 | 0 | 0 | 1 | 0 |
| 6 | 0 | 0 | 0.92 9 | 0 | 0 | 0 | 0 | 0 | 0 | 0 | 0 | 0 |
| 7 | 0 | 0 | 0.78 6 | 0 | 0 | 0 | 0 | 0 | 0 | 0 | 0 | 0 |
| 8 | 0 | 0 | 0.64 3 | 0 | 0 | 0 | 0 | 0 | 0 | 0 | 0 | 0 |
| 9 | 0 | 0 | 0 | 0.78 6 | 0 | 0 | 0 | 0 | 0 | 0 | 0 | 0 |
| 1 0 | 0 | 0 | 0 | 0 | 0 | 0 | 0 | 0 | 0 | 0 | 0.92 9 | 0 |
| 1 1 | 0 | 0 | 0 | 0 | 1 | 0 | 0 | 0 | 0 | 0.92 9 | 0 | 0.85 7 |
| 1 2 | 0 | 0 | 0 | 0 | 0 | 0 | 0 | 0 | 0 | 0 | 0.85 7 | 0 |

Similarly, edge HNDL risk computation for vertex 4 (App server2) as per equation (3) is given in equations (13) and (14). ${R}_{HNDL}^{{e}_{{v}_{2} {v}_{4}}} = F \left(TLS, RSA, 256, 6, 8, {T}_{0}, {Q}_{T}\right) = 0.857143$ (13) ${R}_{HNDL}^{{e}_{{v}_{9} {v}_{4}}} = F \left(IPSEC, DH, 192, 6, 7, {T}_{0}, {Q}_{T}\right) = 0.785714$ (14) Hence the Edge to Node HNDL Risk Transformation ${E}_{HNDL}^{{v}_{4}}$, for vertex 4 based on the values of ${E}_{HNDL}^{{e}_{{v}_{2}} {v}_{4}}$ and ${E}_{HNDL}^{{e}_{{v}_{9}} {v}_{4}}$ is given in equation (15). ${E}_{HNDL}^{{v}_{4}} = {T}_{24} ∗ {R}_{HNDL}^{{e}_{{v}_{2} {v}_{4}}} + {T}_{94} ∗ {R}_{HNDL}^{{e}_{{v}_{9} {v}_{4}}} = 1.01349931$ (15) The meta data value ${M}_{HNDL}^{v}$ as per equation (1) is = 0.58. Now ${C}_{HNDL}^{v}$ for vertex 4, as per equation (11) is shown in equation (16). ${C}_{HNDL}^{{v}_{4}} = g \left({M}_{HNDL}^{{v}_{4}},MEC\left({v}_{4}\right),{E}_{HNDL}^{{v}_{4}}\right) = g \left(0.58, 0.0568, 1.01349931\right) = 0.68$ (16)

Some of the key contributions of the present disclosure are given below:
- Provides formalization of the HNDL adversarial model and a visualization on how the HNDL risk associated with any link can be calculated by figuring out some of the intrinsic factors that are contributing to the risk calculation.
- An optimized tree-based approach to partition the network links of a given network in distinct subsets such that for any subset every link has the same HNDL risk.
- In the network graph model, two different concepts like routing protocol and Markov chain were combined to obtain the most central vertex in the graph in terms of data flows.
- The present disclosure is capable to transfer the HNDL risk of the edge to it's adjacent node based on the routing protocol of that node and it's adjacent node.
- The critical score (Precise HNDL risk) associated with every device (or network component) subject to HNDL attack is computed using routing protocol influence, edge influence and some metadata by giving a critical/centrality score.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:
receiving (202), by one or more hardware processors, an input network architecture of an application comprising a plurality of components and an associated plurality of interconnection between the plurality of components;
generating (204), by the one or more hardware processors, a directed graph based on the input network architecture by representing each of the plurality of components of the input network architecture as a plurality of nodes and the associated plurality of interconnections between the plurality of components as edges using a graph construction technique, wherein each edge is associated with an edge label comprising an associated cryptographic inventory information;
computing (206), by the one or more hardware processors, an edge Harvest Now Decrypt Later (HNDL) risk value for each of the plurality of edges of the directed graph by categorizing the plurality of edges of the directed graph into distinct subsets based on the cryptographic information associated with each of the plurality of edges using a HNDL adversarial model;
transforming (208), by the one or more hardware processors, the edge HNDL risk value to a node HNDL risk value pertaining to each of the plurality of nodes based on the edge HNDL risk value for each of the plurality of edges of the directed graph and an associated routing information of each of the plurality of nodes and the routing information of an associated plurality of adjacent nodes using a risk transformation technique;
simultaneously computing (210), by the one or more hardware processors, a modified eigen vector centrality for each of the plurality of nodes of the graph using a modified eigen vector centrality computation technique; and
computing (212), by the one or more hardware processors, a critical score for each of the plurality of nodes based on an associated node metadata, the modified eigen vector centrality and an associated node HNDL risk value using a critical network component identification technique.

2. The method as claimed in claim 1, wherein each of the plurality of nodes is associated with a network information and a metadata, wherein the metadata associated with each of the plurality of nodes comprises a device type, a software security information, a data stored tenure, a data security level and accessibility information, and wherein the network information comprises a routing information and a network data details.

3. The method as claimed in claim 1, wherein the cryptographic inventory information comprises a security protocol, a cryptographic primitive information, a data shelf life and a key rotation period, and wherein the cryptographic primitive information comprises a public key cryptography algorithm used and a symmetric key length.

4. The method as claimed in claim 1, wherein the HNDL adversarial model provides a visualization on how the HNDL risk value associated with any edge can be calculated by figuring out some intrinsic factors that are contributing to the risk calculation.

5. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive an input network architecture of an application comprising a plurality of components and an associated plurality of interconnection between the plurality of components;
generate a directed graph based on the input network architecture by representing each of the plurality of components of the input network architecture as a plurality of nodes and the associated plurality of interconnections between the plurality of components as edges using a graph construction technique, wherein each edge is associated with an edge label comprising an associated cryptographic inventory information;
compute an edge Harvest Now Decrypt Later (HNDL) risk value for each of the plurality of edges of the directed graph by categorizing the plurality of edges of the directed graph into distinct subsets based on the cryptographic information associated with each of the plurality of edges using a HNDL adversarial model;
transform the edge HNDL risk value to a node HNDL risk value pertaining to each of the plurality of nodes based on the edge HNDL risk value for each of the plurality of edges of the directed graph and an associated routing information of each of the plurality of nodes and the routing information of an associated plurality of adjacent nodes using a risk transformation technique;
simultaneously compute a modified eigen vector centrality for each of the plurality of nodes of the graph using a modified eigen vector centrality computation technique; and
compute a critical score for each of the plurality of nodes based on an associated node metadata, the modified eigen vector centrality and an associated node HNDL risk value using a critical network component identification technique.

6. The system as claimed in claim 5, wherein each of the plurality of nodes is associated with a network information and a metadata, wherein the metadata associated with each of the plurality of nodes comprises a device type, a software security information, a data stored tenure, a data security level and accessibility information, and wherein the network information comprises a routing information and a network data details.

7. The system as claimed in claim 5, wherein the cryptographic inventory information comprises a security protocol, a cryptographic primitive information, a data shelf life and a key rotation period, and wherein the cryptographic primitive information comprises a public key cryptography algorithm used and a symmetric key length.

8. The system as claimed in claim 5, wherein the HNDL adversarial model provides a visualization on how the HNDL risk value associated with any edge can be calculated by figuring out some intrinsic factors that are contributing to the risk calculation.

9. One or more non-transitory machine-readable information storage mediums comprising one or more instructions which when executed by one or more hardware processors cause:
receiving an input network architecture of an application comprising a plurality of components and an associated plurality of interconnection between the plurality of components;
generating a directed graph based on the input network architecture by representing each of the plurality of components of the input network architecture as a plurality of nodes and the associated plurality of interconnections between the plurality of components as edges using a graph construction technique, wherein each edge is associated with an edge label comprising an associated cryptographic inventory information;
computing an edge Harvest Now Decrypt Later (HNDL) risk value for each of the plurality of edges of the directed graph by categorizing the plurality of edges of the directed graph into distinct subsets based on the cryptographic information associated with each of the plurality of edges using a HNDL adversarial model;
transforming the edge HNDL risk value to a node HNDL risk value pertaining to each of the plurality of nodes based on the edge HNDL risk value for each of the plurality of edges of the directed graph and an associated routing information of each of the plurality of nodes and the routing information of an associated plurality of adjacent nodes using a risk transformation technique;
simultaneously computing a modified eigen vector centrality for each of the plurality of nodes of the graph using a modified eigen vector centrality computation technique; and
computing a critical score for each of the plurality of nodes based on an associated node metadata, the modified eigen vector centrality and an associated node HNDL risk value using a critical network component identification technique.

10. The one or more non-transitory machine-readable information storage mediums as claimed in claim 9, wherein each of the plurality of nodes is associated with a network information and a metadata, wherein the metadata associated with each of the plurality of nodes comprises a device type, a software security information, a data stored tenure, a data security level and accessibility information, and wherein the network information comprises a routing information and a network data details.

11. The one or more non-transitory machine-readable information storage mediums as claimed in claim 9, wherein the cryptographic inventory information comprises a security protocol, a cryptographic primitive information, a data shelf life and a key rotation period, and wherein the cryptographic primitive information comprises a public key cryptography algorithm used and a symmetric key length.

12. The one or more non-transitory machine-readable information storage mediums as claimed in claim 9, wherein the HNDL adversarial model provides a visualization on how the HNDL risk value associated with any edge can be calculated by figuring out some intrinsic factors that are contributing to the risk calculation.
